# EUROPEAN PATENT SPECIFICATION

(11) **EP 3 609 738 B1**
(45) Date of publication and mention of the grant of the patent: **15.12.2021**
(21) Application number: 17905481.2
(22) Date of filing: 11.04.2017
(51) Int. Cl.: B60N 3/00, A47B 83/02, B60N 2/64, B64D 11/06

(54) **ILLUMINATED LITERATURE POCKET FOR AIRCRAFT PASSENGER SEAT**
BELEUCHTETE LEKTÜRETASCHE FÜR FLUGGASTSITZ
POCHE DE DOCUMENTATION ÉCLAIRÉE POUR SIÈGE PASSAGER D'AÉRONEF

(43) Date of publication of application: 19.02.2020
(73) Proprietor: B/E Aerospace, Inc., Wellington, FL 33414 (US)
(72) Inventor: POZZI, Alexander, N., Winston-Salem NC 27104 (US); JOHNSON, Glenn, A., Rual Hall NC 27045 (US); HONTZ, Jeffrey, W., Winston-Salem NC 27106 (US); FREEMAN, Jara, Wellington FL 33414 (US)
(74) Representative: Algemeen Octrooi- en Merkenbureau B.V.
(86) International application number: PCT/US2017/027012
(87) International publication number: WO 2018/190810

(56) References cited:
- CN-U- 204 028 757
- CN-U- 204 028 757
- FR-A1- 2 981 893
- FR-A1- 2 981 893
- US-A- 5 813 354
- US-A- 6 085 666
- US-A1- 2008 136 230
- US-A1- 2015 108 798
- US-A1- 2015 108 798
- US-A1- 2015 109 455
- US-A1- 2015 109 455
- US-B1- 6 994 401
- US-B2- 8 020 936

## Description

### TECHNICAL FIELD AND BACKGROUND OF THE INVENTION

This invention relates to aircraft passenger seats, and more specifically to an aircraft passenger seat back tray table and literature pocket. Many aircraft passenger seats have literature pockets that are positioned below the tray table. Typically, these pockets extend across the width of the seat back and are spring-loaded so that the pocket can be pulled open by a passenger seated aft of the seat back, literature inserted or removed and then released to allow the pocket to spring closed. These pockets are sometimes hard to reach, particularly when the seat back is reclined.

More recently, some seats are provided with literature pockets that are positioned just below the headrest. A lateral retention bar extends from one side of the seat back to the other side, behind which is provided a space sufficient to hold magazines, flight information cards, newspapers, etc. The tray table that serves the aft-seated passenger is mounted on or adjacent the seat back and is movable as needed between a stowed position with the tray table locked against the seat back and the top edge of the tray table resting just under the lateral bar, and a deployed position with the tray table lowered into a use position. These literature pockets are easier for both passengers and cleaning crews to access in addition to requiring less, weight-increasing material.

A vertical retention bar extends from a position near the lateral bar to a position near the bottom edge of the tray table when in the stowed position and cooperates with the lateral bar to retain the contents of the literature pocket in the pocket when the tray table is deployed for use.

When the tray table is in the stowed position, the tray table itself further acts to retain the contents of the literature in the pocket.

Present aircraft cabins utilize overhead lights to provide lighting to passengers. These lights are typically incandescent halogen lights, which generate significant heat, require large amounts of energy and are prone to burnout, requiring replacement These lights are typically mounted in an overhead console along with attendant call buttons and an oxygen container cover and are controlled either by a button next to the light or on an armrest. Lighting either to replace the overhead lights or to supplement overhead lighting would provide a benefit to the passengers, particularly if structures already in use for other purposes can be adapted to provide this lighting.

In contrast to incandescent halogen lights, light emitting diode lighting elements generate far less heat, consume less electricity and have an extremely long service life. Light-emitting diode lighting elements typically do not "burnout" towards the end of their service life, but merely gradually change color temperature.

United States patent application US 2015/108798 A1 discloses seat-mounted supports for personal electronic devices ("PEDs"), directed to tablet or smartphone supports for mounting on an airplane seat.

French patent application FR 2 981 893 A1 discloses a seat for a high-speed train having a shelf mounted on a rear portion of the seat and movable between an open use position and a close position. A storage housing is placed in a rear portion of the seat and arranged adjacent to the shelf in the close position. The storage housing comprises a socket, a holding bar and a lamp. The bar retains the objects in a vertical position.

Chinese utiliy model CN 204 028 757 U discloses a LED light supplementing device for an industrial tablet personal computer.

United States patent application US 2015/109455 A1 discloses a method for adjusting an ambient light sensor.

United States patent application US 2008/136230 A1 discloses an aircraft passenger seat with a display monitor including a reading light.

United States patent US 6 994 401 B1 discloses a seat back having a light assembly.

### SUMMARY OF THE INVENTION

The invention defines a passenger seat according to claim 1. Further embodiments are defined in the dependent claims.

### BRIEF DESCRIPTION OF THE DRAWING FIGURES

The present invention is best understood when the following detailed description of the invention is read with reference to the accompanying drawings, in which:

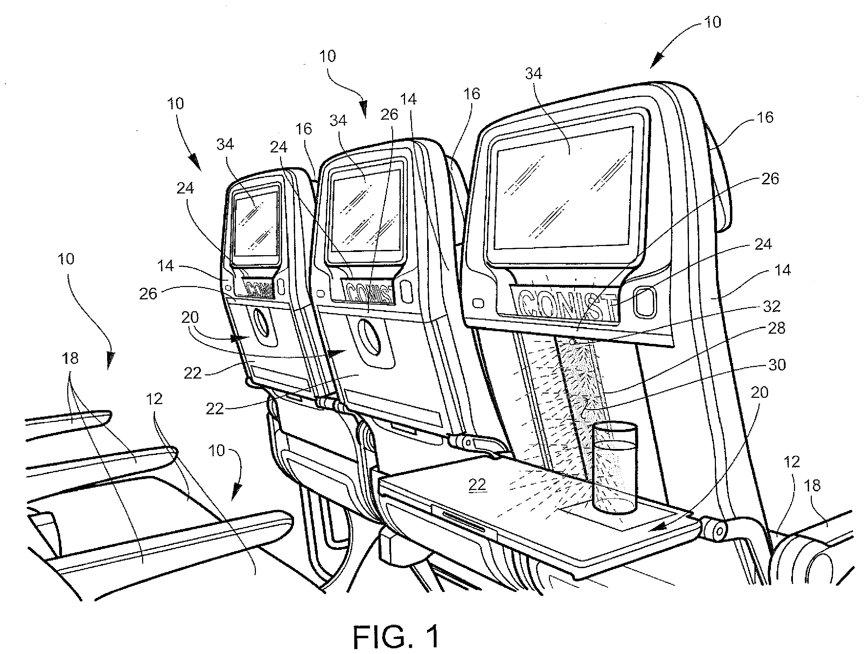

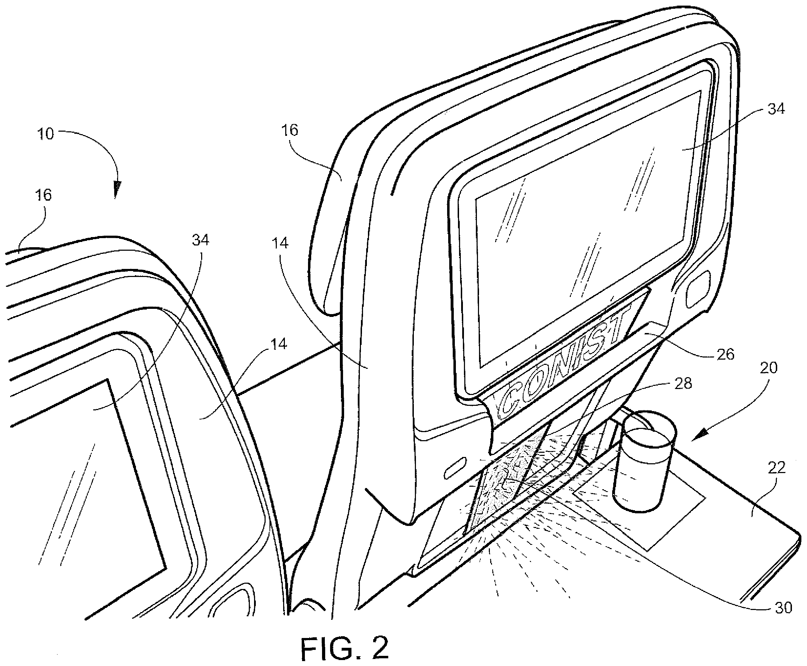

Figures 1 and 2 are perspective views of a seat back light fixture of an aircraft passenger seat.

### DETAILED DESCRIPTION OF THE PREFERRED EMBODIMENT

Referring now to the drawings, Figure 1 illustrates a conventional array of aircraft passenger seats of a type typically found in the main cabin of a commercial aircraft. Each seat 10 includes a cushioned seat bottom 12, seat back 14, headrest 16 and armrests 18. Each seat 10 also includes a tray table assembly 20 of the type that moves between a raised, stowed position shown in Figure 1 and a lowered, deployed position, also shown in Figure 1 and in Figure 2. In the stowed position, the tray table 22 of the tray table assembly 20 resides in a locked condition against the aft side of the seat back 14. In this position, a literature-pocket 24 is exposed above the stowed tray table 22 for use by a passenger seated in a seat aft of the seat back 14 and the literature pocket 24. A lateral retention bar 26 is exposed, which retains the contents of the literature pocket 24 in both the stowed and deployed positions of the tray table 22.

As shown with reference to the tray table 22 of Figures 1 and 2, when deployed, a vertical retention bar light fixture 28 extends from a position near the lateral retention bar 26 to a position near the bottom edge of the tray table 22 and cooperates with the lateral retention bar 26 to retain the contents of the literature pocket 24 when the tray table is deployed for use. The light fixture 28 preferably vertically bisects the lateral retention bar 26 and has a width that is approximately one-third the overall width of the lateral retention bar 26. The light fixture 28 is preferably recessed into the seat back 14 sufficiently so that when the tray table is stowed, it can reside flush against the seat back 14.

In accordance with the invention, the light fixture 28 includes an electrically connected array of light-emitting diode ('TED'") lighting elements contained within the fixture 28 and covered by a clear plastic cover 30. The number of LEDs, the white light color definition, intensity and similar factors are variable and based on considerations such as the color of the overhead cabin and wash light in the surrounding area, spacing between the retention bar 28 and the tray table 22 and similar factors. Typical reading light values may be in the range of 300-500 lux, (lumen/m²) with a range of 3600-5200K color temperature, or other values determined by government regulation and/or customer requirements.

The LED's are preferably dimmable, with a "night light" intensity of approximately 30-15 lux, (lumen/m²). The LED lighting elements may be controlled manually by a switch on the in-flight entertainment ("IFE") screen 34 or on the light fixture 28 itself. The light fixture 28 can be set to automatically switch to the "off" position when the tray table 22 is stowed, and the fixture 28 can be shrouded to direct light on the area of the seat back 14 above the lateral retention bar 24 when the tray table 22 is stowed.

The LED's may be spaced in one or more predetermined patterns within the fixture 28 and may be spaced within the entire area of the fixture 28 or may occupy less than the entire area of the fixture 28. Focusing lenses may be incorporated into the cover 30 to focus light in one or more directions, such as downwardly onto the tray table 22. A sensor 32 on top of the cover 30 senses the color, intensity and similar factors in the cabin and can adjust the lighting of the fixture 28 without being connected to a cable. Other options including running one or more strands of fiber optic lighting strips within the fixture 28 to create light "ribbons" of varying or alternating intensity and/or color. The fiber optic light can also be controlled by a computer or digital memory board to create images such as a logo. The clear plastic coyer 30 may be a touch screen to control the LED's, or may be used to create moving patterns or to operate games incorporated into the fixture 28.

A passenger seat back light fixture according to the invention has been described with reference to specific embodiments and examples. Various details of the invention maybe changed without departing from the scope of the invention defined by the appended claims. Furthermore, the foregoing description of the preferred embodiments of the invention and best mode for practicing the invention are provided for the purpose of illustration only and not for the purpose of limitation, the invention being defined by the claims.

## Claims

1. Passenger seat (10) that includes
a seat bottom (12);
a seat back (14) having a back side;
a tray table assembly (20) of a type that moves between a raised, stowed position and a lowered, deployed position, and having a tray table (22), wherein, in the stowed position, the tray table (22) resides in a locked condition against the back side of the seat back (14);
a literature pocket (24) extending across a width of the seat back (14), being located at least partially behind the tray table when the tray table (22) is in the stowed position and being defined by a lateral retention bar (26) extending across the width of the seat back above the tray table (22) when the tray table (22) is in the stowed position;
wherein the lateral retention bar (26) is configured to retain contents of the literature pocket (24) in both the stowed and deployed positions of the tray table (22); and
a light fixture (28) powered by an electrical circuit mounted on the literature pocket (24) and adapted to direct light into a space directly aft of the seat back (14) for use by an aft-seated passenger;
wherein
the light fixture is embodied as a vertical retention bar light fixture (28) and extends downwardly from the lateral retention bar (26) towards a deployed position of the tray table (22); and
the literature pocket (24) and the light fixture (28) are positioned in a recess in an aft-facing surface of the seat back (14), wherein the tray table (22) fits flush against the seat back (14) and the light fixture (28) when the tray table (22) is in the stowed position.

2. Passenger seat (10) according to claim 1, wherein the light fixture (28) has a longer vertical extent than a lateral extent.

3. Passenger seat (10) according to claim 1, wherein the light fixture is comprised of a plurality of light-emitting diodes, preferably a plurality of spaced-apart light-emitting diodes.

4. Passenger seat (10) according to claim 1, including a light sensor (32) that senses color, intensity and is adapted to adjust one or more characteristics of the light emitted by the light fixture (28).

5. Passenger seat (10) according to claim 3, wherein the light-emitting diodes are spaced-apart within the entire light fixture (28).

6. Passenger seat (10) according to claim 3, wherein the light-emitting diodes are spaced-apart within less than the entire light fixture (28).

7. Passenger seat (10) according to claim 1, wherein a width of the light fixture (28) is one-third of a width of the lateral retention bar (26).

## Patentansprüche

1. Passagiersitz (10), der Folgendes umfasst:
einen Sitzboden (12);
eine Sitzrückenlehne (14) mit einer Rückseite;
eine Ablagetischanordnung (20) eines Typs, der sich zwischen einer angehobenen, verstauten Position und einer abgesenkten, ausgeklappten Position bewegt und einen Ablagetisch (22) aufweist, wobei, in der verstauten Position, der Ablagetisch (22) in einem verriegelten Zustand an der Rückseite der Sitzrückenlehne (14) ruht;
eine Lektüretasche (24), die sich über eine Breite der Sitzrückenlehne (14) erstreckt, die sich zumindest teilweise hinter dem Ablagetisch befindet, wenn der Ablagetisch (22) in der verstauten Position ist, und die durch eine laterale Rückhalteleiste (26) definiert wird, die sich über die Breite der Sitzrückenlehne über dem Ablagetisch (22) erstreckt, wenn der Ablagetisch (22) in der verstauten Position ist;
wobei die laterale Rückhalteleiste (26) dazu ausgelegt ist, Inhalte der Lektüretasche (24) sowohl in der verstauten als auch in der ausgeklappten Position des Ablagetisches (22) zurückzuhalten; und
eine Beleuchtungsvorrichtung (28), betrieben durch eine an der Lektüretasche (24) montierte elektrische Schaltung und dazu angepasst, Licht in einen Raum direkt hinter der Sitzrückenlehne (14) zu leiten, zur Verwendung durch einen dahinter sitzenden Passagier;
wobei die Beleuchtungsvorrichtung als eine vertikale Rückhalteleisten-Beleuchtungsvorrichtung (28) ausgeführt ist und sich von der lateralen Rückhalteleiste (26) in Richtung einer ausgeklappten Position des Ablagetisches (22) nach unten erstreckt; und
wobei die Lektüretasche (24) und die Beleuchtungsvorrichtung (28) in einer Vertiefung in einer nach hinten zeigenden Oberfläche der Sitzrückenlehne (14) positioniert sind, wobei der Ablagetisch (22) bündig mit der Sitzrückenlehne (14) und der Beleuchtungsvorrichtung (28) abschließt, wenn der Ablagetisch (22) in der verstauten Position ist.

2. Passagiersitz (10) nach Anspruch 1, wobei die Beleuchtungsvorrichtung (28) eine längere vertikale Ausdehnung als eine laterale Ausdehnung aufweist.

3. Passagiersitz (10) nach Anspruch 1, wobei die Beleuchtungsvorrichtung aus mehreren Leuchtdioden, vorzugsweise mehreren voneinander beabstandeten Leuchtdioden besteht.

4. Passagiersitz (10) nach Anspruch 1, umfassend einen Lichtsensor (32), der Farbe, Intensität erfasst und dazu angepasst ist, eine oder mehrere Charakteristiken des durch die Beleuchtungsvorrichtung (28) emittierten Lichts einzustellen.

5. Passagiersitz (10) nach Anspruch 3,
wobei die Leuchtdioden innerhalb der gesamten Beleuchtungsvorrichtung (28) voneinander beabstandet sind.

6. Passagiersitz (10) nach Anspruch 3, wobei die Leuchtdioden in weniger als der gesamten Beleuchtungsvorrichtung (28) voneinander beabstandet sind.

7. Passagiersitz (10) nach Anspruch 1, wobei eine Breite der Beleuchtungsvorrichtung (28) ein Drittel einer Breite der lateralen Rückhalteleiste (26) ist.

## Revendications

1. Siège passager (10) qui comporte
un fond de siège (12) ;
un dossier de siège (14) ayant un côté arrière ;
un ensemble de tablette (20) d'un type qui se déplace entre une position relevée rangée et une position abaissée déployée, et ayant une tablette (22), dans lequel, dans la position rangée, la tablette (22) se trouve dans un état verrouillé contre le côté arrière du dossier de siège (14) ;
une poche à documents (24) s'étendant sur une largeur du dossier de siège (14), étant située au moins partiellement derrière la tablette lorsque la tablette (22) est dans la position rangée et étant définie par une barre de retenue latérale (26) s'étendant sur la largeur du dossier de siège au-dessus de la tablette (22) lorsque la tablette (22) est dans la position rangée ;
dans lequel la barre de retenue latérale (26) est configurée pour retenir le contenu de la poche à documents (24) à la fois dans les positions rangée et déployée de la tablette (22) ; et
un appareil d'éclairage (28) alimenté par un circuit électrique monté sur la poche à documents (24) et adapté pour diriger la lumière dans un espace directement à l'arrière du dossier de siège (14) pour une utilisation par un passager assis à l'arrière ;
dans lequel
l'appareil d'éclairage est réalisé sous la forme d'un appareil d'éclairage à barre de retenue verticale (28) et s'étend vers le bas depuis la barre de retenue latérale (26) vers une position déployée de la tablette (22) ; et
la poche à documents (24) et l'appareil d'éclairage (28) sont positionnés dans un évidement dans une surface tournée vers l'arrière du dossier de siège (14), où la tablette (22) s'ajuste à fleur contre le dossier de siège (14) et l'appareil d'éclairage (28) lorsque la tablette (22) est dans la position rangée.

2. Siège passager (10) selon la revendication 1, dans lequel l'appareil d'éclairage (28) a une étendue verticale plus longue qu'une étendue latérale.

3. Siège passager (10) selon la revendication 1, dans lequel l'appareil d'éclairage est constitué d'une pluralité de diodes électroluminescentes, de préférence d'une pluralité de diodes électroluminescentes espacées.

4. Siège passager (10) selon la revendication 1, comportant un capteur de lumière (32) qui détecte la couleur, l'intensité et est adapté pour régler une ou plusieurs caractéristiques de la lumière émise par l'appareil d'éclairage (28).

5. Siège passager (10) selon la revendication 3, dans lequel les diodes électroluminescentes sont espacées dans la totalité de l'appareil d'éclairage (28).

6. Siège passager (10) selon la revendication 3, dans lequel les diodes électroluminescentes sont espacées dans moins de la totalité de l'appareil d'éclairage (28).

7. Siège passager (10) selon la revendication 1, dans lequel la largeur de l'appareil d'éclairage (28) est le tiers de la largeur de la barre de retenue latérale (26).
